# EUROPEAN PATENT SPECIFICATION

(11) **EP 0 463 250 B1**
(45) Date of publication and mention of the grant of the patent: **01.02.1995**
(21) Application number: 90307114.0
(22) Date of filing: 28.06.1990
(51) Int. Cl.: G06F 3/033, G06F 9/46

(54) **Data processing apparatus user interface and data processing apparatus with such an interface**
Benutzerschnittstelle für Datenverarbeitungsanlage und Datenverabeitungsanlage mit einer sochen Schnittstelle
Interface utilisateur pour un appareil de traitement de données et appareil de traitement de données avec une telle interface

(43) Date of publication of application: 02.01.1992
(73) Proprietor: International Business Machines Corporation, Armonk, N.Y. 10504 (US)
(72) Inventor: Kane, Jacqueline, Dublin 9 (IE); Doyle, Mary Theresa, Co. Dublin (IE)
(74) Representative: Moss, Robert Douglas

(56) References cited:
- EP-A- 0 312 866
- US-A- 4 862 389
- US-A- 8 402 021

## Description

### DATA PROCESSING APPARATUS USER INTERFACE

This invention relates to the field of data processing. More particularly, this invention relates to the field of user interfaces for data processing apparatus.

The user interface of a piece of data processing apparatus is a term that is used to describe the way that apparatus interacts with its user. A particularly important part of a user interface is the way the apparatus displays information the user of the device. Considerable attention is directed at this aspect of user interfaces, and one approach that has been successfully adopted is the so called 'windowing interface'.

In a windowing system such as that used in the Operating System/2 computer program produced by International Business Machines Corporation (Operating System/2 is a trade mark of International Business Machines Corporation), the display is divided into a number of rectangular areas each displaying a piece of text or graphics as appropriate. The windows can be compared to pieces of paper on a desk top, with each window capable of overlapping and obscuring windows having a lower priority in the display. More recent windows systems also provide multiprocessing facilities with which several application programs may be concurrently active. A window may be dedicated to a particular application such as word processing or spreadsheet or alternatively to different threads within a single application, e.g. a window may be allocated to each different part of a word processing application such as pagination, printing, spell checking and the like - different activities on different documents can be controlled concurrently through each window.

One feature of these windowing systems is the provision of so called dialog boxes using which data relating to a preceding action can be entered. An example of this would be if a window displayed a list of names and telephone numbers, a possible action for selection would be to edit the details of an entry. The user would highlight the entry concerned in the list names and then select the action of edit from the list of actions. Having done this the system would display a dialog box possibly overlapping a portion of the window containing the names list. The dialog box would display the full details of that entry, and then by moving around and over typing portions the entry can be edited.

Dialog boxes in existing systems fall into two categories. The is first is modeless dialog boxes, which are such that when they are produced they can be completed at any time, and any other action can be taken in another window whilst the dialog box is still displayed. The second is modal dialog boxes, which come in two forms. System modal dialog boxes are such that when produced no other action may be made by the user until that system modal dialog box has been completed and removed. Application modal dialog boxes are such that when produced no action may be made by the user within the application to which that dialog box belongs until the dialog box has been completed and removed.

The present invention is concerned with the problem of producing data processing apparatus with a user interface that is easier to understand and work with.

Viewed from one aspect the invention provides a method of manipulating data stored by a data processing apparatus having a windowing user interface, said method comprising the steps of:
detecting a user input requesting display for manipulation of data within a logically defined division of an application program being executed by said data processing apparatus,
creating a dialog window displaying said data for manipulation,
storing mode data which indicates that said dialog window within said logically defined division is being displayed, and
upon a subsequent request to manipulate data within a given logically defined division, rejecting said subsequent request if said mode data indicates that a dialog window for said logically defined division is being displayed and said subsequent request is determined to be of a type which may conflict with manipulation being made using said dialog window being displayed.

The invention both recognises and solves the problem that whilst ensuring data integrity within an application is maintained it is important not to excessively restrict the different actions a user may wish to undertake with the data processing apparatus.

The modeless dialog boxes allow the user complete freedom to undertake other actions with the system, but suffer from the disadvantage of not protecting the user from taking actions which disrupt data integrity, e.g the user can have open a dialog box for editing an entry in data database, whilst at the same deleting that entry in the database using another part of the application.

The modal dialog boxes, either application or system modal, do protect the user from producing integrity problems, but suffer from the disadvantage of restricting the users freedom more than is truely necessary.

The invention provides a mechanism that is responsive to whether or not a dialog box within a part of an application is already open and whether the further request is capable of creating a data integrity problem with that change being made in the dialog box already open. Thus, data integrity is protected whilst the restriction of actions possible is held to only a part of the application and also to only requests that could cause data integrity problems.

An example would be a database application for manipulating a list of peoples' telephone numbers or a list of books. The type of actions you may wish to take against each of these lists would be edit an item, add an item, delete an item or sort the list. The list of users and books are quite separate and so would be defined to be within different logically defined divisions of the program - changes to either list wouldn't effect the integrity of the other.

Within a given list if it is decided to edit the details of a particular user then the user is selected from the list of users and the edit action selected from the list of actions thereby triggering production of an edit dialog box for that user. Once that dialog box was open then the other actions which pose a threat to data integrity would be blocked until the editing had been finished and the edit dialog box removed.

A preferred feature of the invention is that said mode data of said dialog window stores an identifier to said logically defined division, said logically defined division identifier being used for directing movement of a cursor between said dialog window and said logically defined division to switch activity therebetween. This feature allows the user to move between the dialog window and other parts of the logically defined division thereby giving a clear visual indication of the link between them. This is particularly useful when more than one dialog box is displayed, each relating to a different logically defined division of the application. In such circumstance each logically defined division could have a number of dialog boxes associated with it each being independently movable. The display could become jumbled and the user may become confused as to which elements of the display relate to one another. By providing a mechanism for rapidly moving focus (i.e. cursor and active status) by preferably using repeated operation of a single key on a keyboard the link between the items is made clear and rapid movement between them is possible.

In preferred embodiments of the invention if said subsequent request does not conflict then a subsequent dialog window is created for said logically defined division and any further subsequent request is tested for conflict with all manipulations being made using dialog windows within that logically defined division. This feature allows more than one dialog box to be created within a logically division to aid the flexibility of the system and yet still protects data integrity. An example would be if the edit telephone number list dialog window included an option of displaying STD (national dialling) codes within another dialog window. This option would be allowed to be activated as no conflict in integrity could arise.

In preferred embodiments of the invention said mode data for each dialog box provides an identifier to one or more other dialog windows of said logically defined division, said dialog window identifier being used for directing movement of a cursor between dialog windows within said logically defined division to switch activity therebetween. The dialog windows within a logically defined division may be thought of as forming a chain of dialog windows between which the user can move to manipulate data within that logically defined division. The provision of this pointer enables the application to move between dialog windows in response to a single command, such as use of the cursor keys. The movement between dialog boxes can be considered as equivalent to movement between links in a chain.

A further preferred feature of the invention is that said logically defined division stores an identifier to a main application action menu, said main application menu identifier being used for directing movement of a cursor between said logically defined division and said main application action menu to switch activity therebetween. In this way the complete chain of all dialog windows for a given logically defined division, the root action menu for the given logically defined division and the main application action menu can be quickly moved between and a clear visual indication of their hierarchical relationship given.

Viewed from a second aspect the invention provides a data processing apparatus having a display, a windowing user interface and dialog box control logic for:
detecting a user input from a user input device requesting display for manipulation of data within a logically defined division of an application program being executed by said data processing apparatus,
creating a dialog window displaying said data for manipulation,
storing mode data which indicates that said dialog window within said logically defined division is being displayed, and
upon a subsequent request to manipulate data within a given logically defined division, rejecting said subsequent request if said mode data indicates that a dialog window for said logically defined division is being displayed and said subsequent request is determined to be of a type which may conflict with manipulation being made using said dialog window being displayed.

An embodiment of the invention will now be described, by way of example only, with reference to the accompanying drawings in which:

Figure 1 illustrates a windowing user interface having a plurality of logically defined divisions.

Figure 2 illustrates the selection of an action within one logically defined division.

Figure 3 illustrates a dialog box within one logically defined division.

Figure 4 illustrates a second level dialog box.

Figure 5 is a flow diagram illustrating the operation of an embodiment of the invention.

Figure 6 is a schematic illustration of a data processing apparatus using the present invention.

Figure 7 is a schematic illustration of a data structure used in controlling the interaction of dialog boxes in one embodiment of the invention.

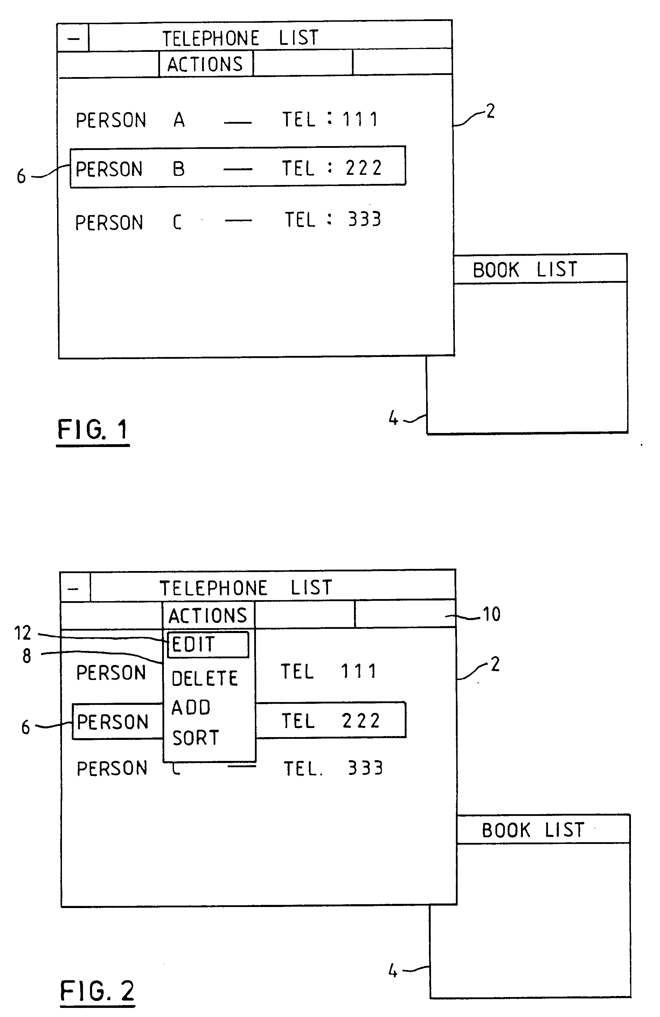

Figure 1 illustrates a database application having a windowing user interface and a number of logically defined divisions within the application program. The program provides access to a list of telephone numbers and peoples names via window 2 and to a list of books via window 4. The telephone list and the book list are separate logically defined divisions within the program since changes in one do not effect the data integrity of the other. In order to carry out a function on one of the items in the telephone list that item is selected by manipulation of the cursor. The selected item 6 is highlighted within the list.

Figure 2 illustrates the next step in the manipulation of the data. A pull down menu 8 from the root action bar menu 10 is selected. The user then highlights a particular action 12 he wishes to perform on the selected item 6.

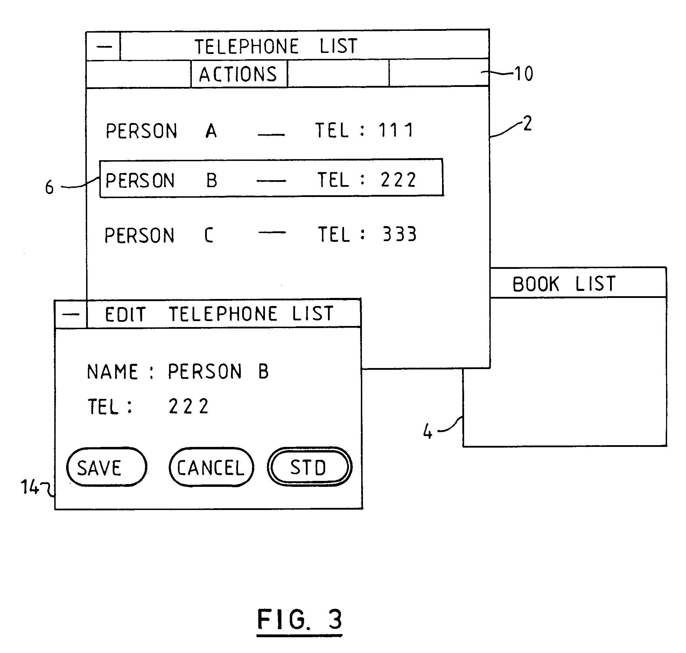

Figure 3 illustrates the response to this action selection. The pulled down menu is no longer displayed and an edit telephone list dialog box 14 is created. This edit telephone list dialog box displays details of the selected item 6 which may be edited by the user. When the user has finished with editing the changes can either be saved or discarded using the "Save" or "Cancel" buttons within the dialog box 14. If during the editing of the telephone list the user wishes to refer to a list of STD telephone codes then a second level dialog box 16 can be selected by activating the "STD" button.

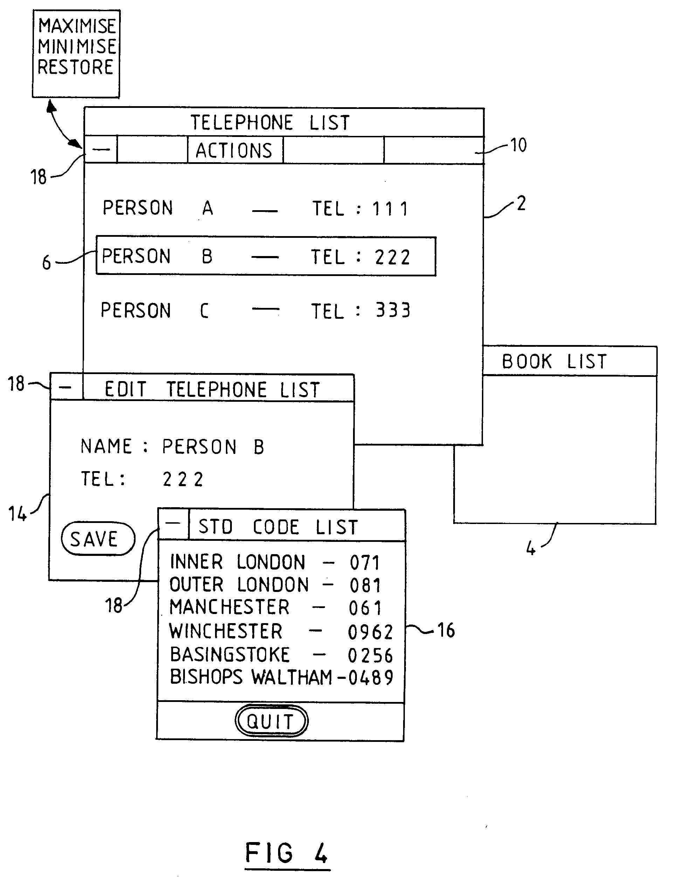

Figure 4 illustrates the display with both first and second level dialog boxes. It will be seen that the display is now becoming complicated. This illustrates why there is a need to protect the user from making changes which could interfere with data integrity. With a large number of different windows being displayed it would be easy for the user to become confused as to which window related to which particular action he wished to make. In order to help the user recognise the link between the various windows a facility is provided for moving between the various portions of a logically defined division. By pressing a particular function key the system moves the focus (i.e. changes which window is active) to the main application menu bar of the logically defined division that is currently active. By manipulating the cursor keys the user may then successively bring the focus to the various other elements within the logically defined division.

The system menu 18 is available on each window and allows the selection of actions which apply to the form of the window itself rather than the function it is performing. When the cursor is moved between the elements within a logically defined division using the function key and cursor keys (chaining process) it is placed on top of the system menu in each window since all windows have a system menu and it is often the system menu functions that are desired to be used. The system menu is initially displayed in the form of a symbol which must be selected to produce the display of the various actions within the system menu.

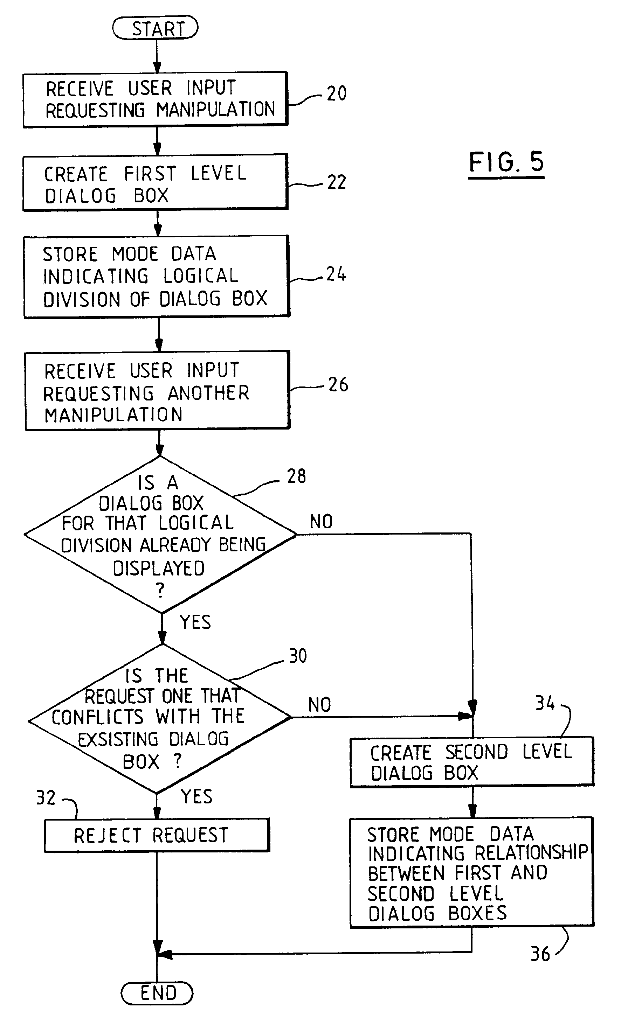

Figure 5 is a flow diagram illustrating the operation of an embodiment. At step 20 the system receives a user input requesting manipulation, e.g. the user has manipulated the cursor to pick a selected item 6 and a selected action 8. At step 22 the system creates the first level dialog box. At step 24 the system stores the mode data indicating to that dialog box which logical division of the application it belongs to and also indicating to the logical division that a dialog box has been created within it. At step 26 the system receives another user input requesting a further manipulation, e.g. STD code list selection. At step 28 the system reads the stored mode data to determine where a dialog box has already been created for that logical division. At step 30 the system determines whether the subsequent request received at step 26 is one that conflicts with the existing dialog box created at step 22. This test could be performed by comparing the subsequent request with a list of requests that are known to be capable of producing conflicts with the dialog box created at step 22.

If the result for steps 28 and 30 are both YES then at step 32 the request is rejected. If either of the steps 28 and 30 produce a result of NO then at step 34 the system creates the second level dialog box and at step 36 the system stores the mode data indicating the relationship between the first and second level dialog boxes for use when chaining the dialog boxes together. The process then terminates.

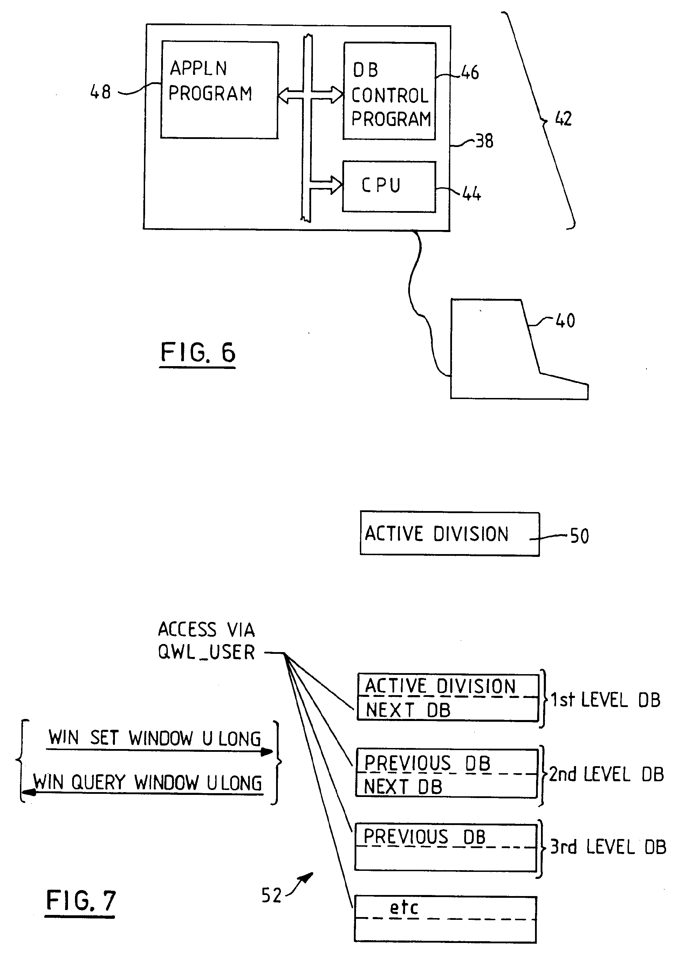

Figure 6 schematically illustrates a data processing apparatus 42 embodying the invention. The data processing apparatus 42 comprises a data processing unit 38 and a display 40. The data processing unit 38 includes a central processor unit 44, a dialog box control program storage area 46 and an application program storage area 48. The central processor unit 44 acting under control of the dialog box control program stored in dialog box control program storage 46 acts as logic for carrying out the functions with which the present invention is concerned. The central processor unit 44 acting under the control of the application program stored within the application program storage area 48 acts as logic to provide the data base application program described earlier.

It will be appreciated that whilst the present invention has been described in terms of a general purpose computer acting under the control of a computer program it would be possible (although in practice difficult and expensive) to embody the invention in special purpose hardware. Similarly, it will be appreciated that the invention is not restricted to the use of any particular computer language.

Figure 7 illustrates a data structure that can be used within the Presentation Manager program discussed earlier to store the mode data indicating the connection between the various items within the logically defined division. Within the Presentation Manager environment the application system records data indicating what logically defined division of the program is currently active, i.e. stores the window handle of the currently active logical division. When focus is changed between logically defined divisions the application updates this store. This is illustrated as store 50. The Presentation Manager environment also provides a facility for use by dialog boxes and windows for storing pointers to data structures designated offset QWL_USER. The central processor unit 44 acting under the control of the dialog box control program may store data in and access data from these data structures using the WinSetWindowULong and WinQueryWindowULong commands within the Presentation Manager environment. The dialog boxes each store within this storage 52 data pointing to the previous item within the logical division chain and the following item within the logical division chain. In this way second and lower level dialog box point to the previous and next dialog box within the chain and the first level dialog box points to the route action menu 10 for that logically defined division and the next (second level) dialog box within the chain. It will be appreciated that the above is just one example of a storage structure that may be used to control the relationship between the various items within the logically defined division.

## Claims

1. A method of manipulating data stored by a data processing apparatus having a windowing user interface, said method comprising the steps of:
detecting a user input requesting display for manipulation of data within a logically defined division of an application program being executed by said data processing apparatus,
creating a dialog window displaying said data for manipulation,
storing mode data which indicates that said dialog window within said logically defined division is being displayed, and
upon a subsequent request to manipulate data within said given logically defined division, rejecting said subsequent request if said mode data indicates that a dialog window for said logically defined division is being displayed and said subsequent request is determined to be of a type which may conflict with manipulation being made using said dialog window being displayed.

2. A method as claimed in claim 1, wherein said mode data of said dialog window stores an identifier to said logically defined division, said logically defined division identifier being used for directing movement of a cursor between said dialog window and said logically defined division to switch activity therebetween.

3. A method as claimed in any of claims 1 or 2, wherein if said subsequent request does not conflict, then a subsequent dialog window is created for said logically defined division and any further subsequent request is tested for conflict with all manipulations being made using dialog windows within that logically defined division.

4. A method as claimed in claim 3, wherein said mode data for each dialog box provides an identifier to one or more other dialog windows of said logically defined division, said dialog window identifier being used for directing movement of a cursor between dialog windows within said logically defined division to switch activity therebetween.

5. A method as claimed in any of claims 2 to 5, wherein said logically defined division stores an identifier to a main application action menu, said main application menu identifier being used for directing movement of a cursor between said logically defined division and said main application action menu to switch activity therebetween.

6. A method as claimed in any of claims 2 to 5, wherein said movement of said cursor is affected by repeated operation of a key on a keyboard.

7. A data processing apparatus having a display, a windowing user interface and dialog box control logic for:
detecting a user input from a user input device requesting display for manipulation of data within a logically defined division of an application program being executed by said data processing apparatus,
creating a dialog window displaying said data for manipulation,
storing mode data which indicates that said dialog window within said logically defined division is being displayed, and
upon a subsequent request to manipulate data within a given logically defined division, rejecting said subsequent request if said mode data indicates that a dialog window for said logically defined division is being displayed and said subsequent request is determined to of a type which may conflict with manipulation being made using said dialog window being displayed.

8. A data processing apparatus as claimed in claim 7, wherein said mode data of said dialog window stores an identifier to said logically defined division, said logically defined division identifier being used for directing movement of a cursor between said dialog window and said logically defined division to switch activity therebetween.

9. A data processing apparatus as claimed in any of claims 7 or 8, wherein if said subsequent request does not conflict, then a subsequent dialog window is created for said logically defined division and any further subsequent request is tested for conflict with all manipulations being made using dialog windows within that logically defined division.

10. A data processing apparatus as claimed in claim 9, wherein said mode data for each dialog box provides an identifier to one or more other dialog windows of said logically defined division, said dialog window identifier being used for directing movement of a cursor between dialog windows within said logically defined division to switch activity therebetween.

11. A data processing apparatus as claimed in any of claims 8 to 10, wherein said logically defined division stores an identifier to a main application action menu, said main application menu identifier being used for directing movement of a cursor between said logically defined division and said main application action menu to switch activity therebetween.

12. A data processing apparatus as claimed in any of claims 8 to 11, wherein said movement of said cursor is affected by repeated operation of a key on a keyboard.

## Patentansprüche

1. Ein Verfahren zur Behandlung von Daten, die in einer Datenverarbeitungsanlage mit Benutzerschnittstelle auf Fensterbasis gespeichert werden, wobei dieses Verfahren folgende Schritte umfaßt:
Feststellen einer Benutzereingabe, in der eine Anzeige zur Behandlung von Daten innerhalb eines logisch definierten Bereichs eines Anwendungsprogramms, das auf der genannten Datenverarbeitungsanlage ausgeführt wird, angefordert wird;
Erstellen eines Dialogfensters, in dem die genannten zu behandelnden Daten angezeigt werden;
Speichern von Modusdaten, die anzeigen, daß das genannte Dialogfenster innerhalb des genannten logisch definierten Bereichs angezeigt wird, und
Bearbeiten von Daten innerhalb des genannten logischen Bereichs bei einer nachfolgenden Anforderung, Zurückweisen der genannten nachfolgenden Anforderung, wenn die genannten Modusdaten anzeigen, daß ein Dialogfenster für den genannten logisch definierten Bereich angezeigt wird und daß die genannte nachfolgende Anforderung als solcher Typ erkannt wird, der mit dieser Datenbearbeitung unter Verwendung des genannten angezeigten Dialogfensters zu einem Konflikt führen kann.

2. Ein Verfahren gemäß Anspruch 1, in dem die genannten Modusdaten des genannten Dialogfensters eine Markierung zum genannten logisch definierten Bereich speichern, wobei diese Markierung des genannten logisch definierten Bereichs verwendet wird, um die Bewegung eines Cursors zwischen dem genannten Dialogfenster und dem genannten logisch definierten Bereich zu steuern, so daß ein Umschalten der Aktivität möglich ist.

3. Ein Verfahren gemäß Anspruch 1 oder 2, in dem, wenn die genannte nachfolgende Anforderung keinen Konflikt verursacht, für den genannten logisch definierten Bereich ein nachfolgendes Dialogfenster erstellt und jede weitere nachfolgende Anforderung auf einen Konflikt hin geprüft wird, wobei alle Bearbeitungen unter Verwendung von Dialogfenstern innerhalb dieses logisch definierten Bereichs erfolgen.

4. Ein Verfahren gemäß Anspruch 3, in dem die genannten Modusdaten für jedes Dialogfeld eine Markierung zu einem oder mehreren anderen Dialogfenstern dieses logisch definierten Bereichs bereitstellen, wobei die Markierung des genannten Dialogfensters zur Steuerung der Bewegung eines Cursors zwischen Dialogfenstern innerhalb des genannten logisch definierten Bereichs verwendet wird, so daß ein Umschalten der Aktivität möglich ist.

5. Ein Verfahren gemäß jedem der Ansprüche 2 bis 4, in dem der genannte logisch definierte Bereich eine Markierung zu einem Anwendungshauptmenü speichert, wobei die Markierung des genannten Anwendungshauptmenüs zur Steuerung der Bewegung eines Cursors zwischen dem genannten logisch definierten Bereich und dem genannten Anwendungshauptmenü verwendet wird, so daß ein Umschalten der Aktivität möglich ist.

6. Ein Verfahren gemäß jedem der Ansprüche 2 bis 5, in dem die genannte Bewegung des genannten Cursors durch wiederholte Betätigung einer Taste auf der Tastatur beeinflußt wird.

7. Eine Datenverarbeitungsanlage mit einer Anzeige, einer Benutzerschnittstelle auf Fensterbasis und einer Dialogfeld-Steuerlogik für:
Feststellen einer Benutzereingabe von einem Benutzereingabegerät, in der eine Anzeige zur Behandlung von Daten innerhalb eines logisch definierten Bereichs eines Anwendungsprogramms, das auf der genannten Datenverarbeitungsanlage ausgeführt wird, angefordert wird;
Erstellen eines Dialogfensters, in dem die genannten zu behandelnden Daten angezeigt werden;
Speichern von Modusdaten, die anzeigen, daß das genannte Dialogfenster innerhalb des genannten logisch definierten Bereichs angezeigt wird, und
Bearbeiten von Daten innerhalb des genannten logischen Bereichs bei einer nachfolgenden Anforderung, Zurückweisen der genannten nachfolgenden Anforderung, wenn die genannten Modusdaten anzeigen, daß ein Dialogfenster für den genannten logisch definierten Bereich angezeigt wird und daß die genannte nachfolgende Anforderung als solcher Typ erkannt wird, der mit dieser Datenbearbeitung unter Verwendung des genannten angezeigten Dialogfensters zu einem Konflikt führen kann.

8. Eine Datenverarbeitungsanlage gemäß Anspruch 7, in dem die genannten Modusdaten des genannten Dialogfensters eine Markierung zum genannten logisch definierten Bereich speichern, wobei diese Markierung des genannten logisch definierten Bereichs verwendet wird, um die Bewegung eines Cursors zwischen dem genannten Dialogfenster und dem genannten logisch definierten Bereich zu steuern, so daß ein Umschalten der Aktivität möglich ist.

9. Eine Datenverarbeitungsanlage gemäß Anspruch 7 oder 8, in dem, wenn die genannte nachfolgende Anforderung keinen Konflikt verursacht, für den genannten logisch definierten Bereich ein nachfolgendes Dialogfenster erstellt und jede weitere nachfolgende Anforderung auf einen Konflikt hin geprüft wird, wobei alle Bearbeitungen unter Verwendung von Dialogfenstern innerhalb dieses logisch definierten Bereichs erfolgen.

10. Eine Datenverarbeitungsanlage gemäß Anspruch 9, in dem die genannten Modusdaten für jedes Dialogfeld eine Markierung zu einem oder mehreren anderen Dialogfenstern dieses logisch definierten Bereichs bereitstellen, wobei die Markierung des genannten Dialogfensters zur Steuerung der Bewegung eines Cursors zwischen Dialogfenstern innerhalb des genannten logisch definierten Bereichs verwendet wird, so daß ein Umschalten der Aktivität möglich ist.

11. Eine Datenverarbeitungsanlage gemäß jedem der Ansprüche 8 bis 10, in dem der genannte logisch definierte Bereich eine Markierung zu einem Anwendungshauptmenü speichert, wobei die Markierung des genannten Anwendungshauptmenüs zur Steuerung der Bewegung eines Cursors zwischen dem genannten logisch definierten Bereich und dem genannten Anwendungshauptmenü verwendet wird, so daß ein Umschalten der Aktivität möglich ist.

12. Ein Verfahren gemäß jedem der Ansprüche 8 bis 11, in dem die genannte Bewegung des genannten Cursors durch wiederholte Betätigung einer Taste auf der Tastatur beeinflußt wird.

## Revendications

1. Procédé de manipulation de données emmagasinées par un appareil de traitement de données ayant une interface utilisateur de fenêtrage, ledit procédé comprenant les étapes de:
détecter une entrée d'utilisateur demandant un affichage en vue d'une manipulation de données dans une division définie logiquement d'un programme d'application alors exécuté par ledit appareil de traitement de données,
créer une fenêtre de dialogue affichant lesdites données pour manipulation;
emmagasiner des données de mode qui indiquent que ladite fenêtre de dialogue dans ladite division définie logiquement est alors affichée, et
lors d'une demande suivante pour manipuler des données dans ladite division définie logiquement, rejeter ladite demande suivante si lesdites données de mode indiquent qu'une fenêtre de dialogue pour ladite division définie logiquement est alors affichée et ladite demande suivante est déterminée comme étant d'un type qui peut être en conflit avec une manipulation alors effectuée en utilisant ladite fenêtre de dialogue alors affichée.

2. Procédé selon la revendication 1, dans lequel lesdites données de mode de ladite fenêtre de dialogue emmagasinent un identificateur de ladite division définie logiquement, ledit identificateur de division définie logiquement étant utilisé pour diriger le déplacement d'un curseur entre ladite fenêtre de dialogue et ladite division définie logiquement afin de commuter une activité entre elles.

3. Procédé selon les revendications 1 ou 2, dans lequel ladite demande suivante n'entre pas en conflit, une autre fenêtre de dialogue étant ainsi créée pour ladite division définie logiquement et toute autre demande suivante étant testée pour conflit avec toutes les manipulations alors faites utilisant des fenêtres de dialogue dans cette division définie logiquement.

4. Procédé selon la revendication 3, dan lequel lesdites données de mode pour chaque cadre de dialogue fournissent un identificateur d'une ou plusieurs autres fenêtres de dialogue de ladite division définie logiquement, ledit identificateur de fenêtre de dialogue étant utilisé pour diriger le déplacement d'un curseur entre des fenêtres de dialogue dans ladite division définie logiquement afin de commuter une activité entre elles.

5. Procédé selon l'une quelconque des revendications 2 à 4, dans lequel ladite division définie logiquement emmagasine un identificateur d'un menu d'actions d'application principal, ledit identificateur de menu d'application principal étant utilisé pour diriger le déplacement d'un curseur entre ladite division définie logiquement et ledit menu d'actions d'application principal afin de commuter une activité entre eux.

6. Procédé selon l'une quelconque des revendications 2 à 5, dans lequel ledit déplacement dudit curseur est affecté par une opération répétée d'une touche d'un clavier.

7. Appareil de traitement de données ayant un écran d'affichage, une interface utilisateur de fenêtrage et une logique de contrôle de cadre de dialogue pour:
détecter une entrée d'utilisateur depuis un dispositif d'entrée demandant un affichage pour manipulation de données dans une division définie logiquement d'un programme d'application alors exécuté par ledit appareil de traitement de données,
créer une fenêtre de dialogue affichant lesdites données pour manipulation;
emmagasiner des données de mode qui indiquent que ladite fenêtre de dialogue dans ladite division définie logiquement est alors affichée, et
lors d'une demande suivante pour manipuler des données dans ladite division définie logiquement, rejeter ladite demande suivante si lesdites données de mode indiquent qu'une fenêtre de dialogue pour ladite division définie logiquement est alors affichée et ladite demande suivante est déterminée comme étant d'un type qui peut être en conflit avec une manipulation alors effectuée en utilisant ladite fenêtre de dialogue alors affichée.

8. Appareil de traitement de données selon la revendication 7, dans lequel lesdites données de mode de ladite fenêtre de dialogue emmagasinent un identificateur de ladite division définie logiquement, ledit identificateur de division définie logiquement étant utilisé pour diriger le déplacement d'un curseur entre ladite fenêtre de dialogue et ladite division définie logiquement afin de commuter une activité entre elles.

9. Appareil de traitement de données selon l'une quelconque des revendications 7 ou 8, dans lequel si ladite demande suivante n'est pas en conflit, une autre fenêtre de dialogue est alors créée pour ladite division définie logiquement et toute autre demande suivante est testée pour conflit avec toutes les manipulations alors faites en utilisant des fenêtres de dialogue dans cette division définie logiquement.

10. Système de traitement de données selon la revendication 9, dans lequel lesdites données de mode pour chaque cadre de dialogue fournissent un identificateur de une ou plusieurs autres fenêtres de dialogue de ladite division définie logiquement, ledit identificateur de fenêtre de dialogue étant utilisé pour diriger le déplacement d'un curseur entre des fenêtres de dialogue dans ladite division définie logiquement afin de commuter une activité entre elles.

11. Appareil de traitement de données selon l'une quelconque des revendications 8 à 10, dans lequel ladite division définie logiquement emmagasine un identificateur de menu d'action d'application principal, ledit identificateur de menu d'application principal étant utilisé pour diriger le déplacement d'un curseur entre ladite division définie logiquement et ledit menu d'actions d'application principal afin de commuter une activité entre eux.

12. Appareil de traitement de données selon l'une quelconque des revendications 8 à 11, dans lequel ledit déplacement dudit curseur est affecté par une opération répétée d'une touche d'un clavier.
